# EUROPÄISCHE PATENTSCHRIFT

(11) **EP 2 509 718 B1**
(45) Veröffentlichungstag und Bekanntmachung des Hinweises auf die Patenterteilung: **30.11.2016**
(21) Anmeldenummer: 10787476.0
(22) Anmeldetag: 08.12.2010
(51) Int. Cl.: B05C 17/005, B65D 83/00, B05B 11/02, B29C 45/16

(54) **Kartuschenkolben**
Cartridge piston
Piston à cartouche

(30) Priorität: 11.12.2009 EP 09178940
(43) Veröffentlichungstag der Anmeldung: 17.10.2012
(73) Patentinhaber: Sulzer Mixpac AG, 9469 Haag (CH)
(72) Erfinder: OBRIST, Manfred, A-6890 Lustenau (AT)
(74) Vertreter: Manitz, Finsterwald & Partner GbR
(86) Internationale Anmeldenummer: PCT/EP2010/069199
(87) Internationale Veröffentlichungsnummer: WO 2011/070082

(56) Entgegenhaltungen:
- EP-B1- 1 165 400
- WO-A2-2005/023655
- DE-A1-102005 060 527
- DE-U1- 20 010 417

## Beschreibung

Die Erfindung betrifft einen Kolben für eine Kartusche, insbesondere zum Austrag von feststoffhaltigen Füllmassen.

Ein derartiger Kolben ist beispielsweise aus der DE 200 10 417 U1 bekannt. Der Kolben weist ein erstes Kolbenteil auf, welches mit einer Dichtlippe versehen ist. Die Dichtlippe liegt an der Kartuschenwand an.

Ein weiterer vorbekannter Kolben ist in der EP 1 165 400 B1 offenbart. Dieser Kolben besteht aus einem weichen Kunststoff, zum Beispiel ein Polyethylen niedriger Dichte (LDPE low density polyethylene), um die erforderliche Abdichtung zur Kartuschenwand zu erzielen. Ein derartiger Kolben kann mit Materialien, welche die Füllmasse der Kartusche bilden, nur bedingt verträglich sein. Um zu vermeiden, dass der Kolben entlang seiner Medienseite mit derartigen Materialien in Kontakt kommt, wird ein Abdeckelement verwendet, welches aus einem Kunststoff besteht, der gegenüber der Füllmasse resistent ist. Das Abdeckelement deckt einen Grossteil der Querschnittsfläche auf der Medienseite ab, mit Ausnahme des Randbereichs, welcher benachbart zur Kartuschenwand ist. Der Randbereich wird durch einen Schenkel gebildet, der sich ausserhalb des Abdeckelements entlang des äusseren Umfangs des Kolbens in Richtung der Medienseite erstreckt. Der Schenkel ist von dem Abdeckelement durch eine v-förmige Nut getrennt. Der Schenkel ist in diesem Ausführungsbeispiel zwar mit der Füllmasse in Kontakt, die übrigen Bereiche des Kolbens werden durch das Abdeckelement abgeschirmt. Für einige Füllmassen gilt, dass ein Kontakt mit dem Kolbenmaterial zu einem Quellen des Kolbenmaterials führt, es somit zu einer Aufweitung im Bereich des Schenkels kommt. Dies hat den Vorteil, dass die Dichtwirkung allenfalls verstärkt wird. Alternativ dazu können auch mehrere Dichtlippen am Kolbenumfang angeordnet sein, was beispielsweise aus CH 610 994 bekannt ist.

Die DE 10 2005 060 527 A1 beschreibt ein ringförmiges Dichtelement mit zwei kreisringförmigen und sich axial aneinander anschliessenden Teilbereichen, von denen der erste Teilbereich aus einem Elastomermaterial und der zweite Teilbereich aus einem starren Material besteht. Der zweite Teilbereich kann dabei als ein Abdeckelement des ersten Teilbereichs angesehen werden, das vollständig auf dem ersten Teilbereich aufliegt.

Die WO 2005/023655 A2 beschreibt einen Kolben zum Auspressen eines viskosen Materials wie. beispielsweise Zahnpasta. Der Kolben ist mit einer Schutzschicht versehen, die aus einem thermoplastischen Elastomer besteht.

Aufgabe der Erfindung ist es, zu den genannten Kolben eine Verbesserung zu schaffen, sodass das Abdeckelement und der Kolbenkörper in einem einzigen Arbeitsschritt hergestellt werden können.

Diese Aufgabe wird durch einen Kolben gelöst, der im Mehrkomponentenspritzgussverfahren, insbesondere in einem Montagespritzgussverfahren hergestellt ist. Unter Montagespritzgussverfahren versteht man ein Spritzgussverfahren, in welchem zumindest ein Montageschritt eingespart werden kann. Neben dem Begriff Montagespritzgussverfahren ist auch der Begriff Beweglichkeitsspritzgussverfahren gebräuchlich. Mit diesem Verfahren können insbesondere zueinander bewegliche Bauteile in einem einzigen Arbeitsschritt hergestellt werden, wie beispielsweise verstellbare Lüftungsschlitze in Belüftungselementen oder Scharniere.

Der Kolben weist eine Medienseite sowie eine der Medienseite gegenüberliegende Antriebsseite und einen Kolbenkörper auf und ist umfangsseitig von einem Kolbenmantel begrenzt, wobei die Medienseite eine medienseitige Oberfläche umfasst sowie der Kolbenmantel eine Verbindung zwischen der Medienseite und der Antriebsseite ausbildet, wobei der Kolbenmantel um eine Kolbenachse angeordnet ist und über ein Stegelement mit einem Kolbenkörper verbunden ist, sodass zwischen Kolbenkörper und Kolbenmantel auf der Medienseite eine umlaufende Nut ausgebildet ist, welche die medienseitige Oberfläche umgibt, wobei auf der Medienseite ein Abdeckelement angeordnet ist, welches eine medienseitige Oberfläche und eine antriebsseitige Oberfläche aufweist. Die antriebsseitige Oberfläche liegt auf der medienseitigen Oberfläche des Kolbenkörpers unmittelbar vollständig auf, das heisst, die medienseitige Oberfläche des Kolbenkörpers und die antriebsseitige Oberfläche des Abdeckelements berühren einander im wesentlichen auf der gesamten gemeinsamen Oberfläche, das heisst es besteht ein flächiger Kontakt, der sich im wesentlichen auf die gesamte gemeinsame Oberfläche erstreckt.

Das Abdeckelement wird im Mehrkomponentenspritzgussverfahren direkt auf die Oberfläche des Kolbenkörpers gespritzt. Daher folgt die medienseitigen Oberfläche des Kolbenkörpers den Konturen der antriebsseitigen Oberfläche des Abdeckelements. Die medienseitige Oberfläche des Kolbenkörpers ist daher ein Abbild der antriebsseitigen Oberfläche des Abdeckelements.

Erfindungsgemäss enthält das Abdeckelement ein Stiftelement oder ein Ventilelement, welches durch den Kolbenkörper auf die Antriebsseite des Kolbens reicht. Das Stiftelement und/oder das Ventilelement kann als konisches Steckelement ausgebildet sein. Des weiteren kann das Stiftelement rotationssymmetrisch bezogen auf die Kolbenachse sein. Das Stiftelement und/oder das Ventilelement ist relativ zum Kolbenkörper bewegbar, sodass ein Verbindungsweg zwischen dem Ventilelement und dem Kolbenkörper ausbildbar ist. Das Stiftelement oder Ventilelement weist je ein entsprechendes Ende auf, welches die antriebsseitige Oberfläche des Kolbenkörpers überragt, sodass das Stiftelement oder das Ventilelement unter Einwirkung einer Druckkraft von dem entsprechenden Sitz abhebbar ist, sodass zur Entlüftung ein Entlüftungsspalt sowie der Verbindungsweg zwischen Abdeckelement und Kolbenkörper ausbildbar ist.

Der Kolbenmantel kann auf der Medienseite in einen Vorsprung übergehen, der ein Führungselement zur Führung des Kolbens in einer Kartusche aufweist. Dieses Führungselement bildet eine Schutzkante aus, um einer Beschädigung der Dichtlippe während des Herstellungsverfahrens vorzubeugen. Die Dichtlippe ist zur Herstellung eines dichtenden Kontakts mit einer Wand der Kartusche geeignet.

Das Abdeckelement weist eine medienseitige Oberfläche auf, die der antriebsseitigen Oberfläche gegenüberliegend angeordnet ist, wobei die medienseitige Oberfläche des Abdeckelements konkav ist. Unter konkaver Oberfläche soll hierbei insbesondere eine Oberfläche mit einer Delle verstanden werden, die auf der medienseitigen Oberfläche angeordnet ist. In einem bevorzugten Ausführungsbeispiel handelt es sich bei der Delle um eine rotationssymmetrische Einbuchtung, welche die Form eines Segments einer Kugel hat oder auch als Polsegment eines Ellipsoids ausgestaltet sein kann, wenn die Querschnittsfläche des Kolbens ellipsenförmig ist. Auch ist des denkbar, das die konkave Oberfläche die Form einer Kegelspitze aufweist.

Selbstverständlich sind auch Kombinationen der oben genannten Formen für rotationssymmetrische oder auch nicht rotationssymmetrische Kolben denkbar.

Auf der medienseitigen Oberfläche des Kolbenkörpers kann eine Ausbuchtung vorgesehen sein, die in eine korrespondierende Einbuchtung der antriebsseitigen Oberfläche des Abdeckelements eingreift. Alternativ oder in Ergänzung hierzu kann auf der medienseitigen Oberfläche des Kolbenkörpers eine Einbuchtung vorgesehen sein, die in eine korrespondierende Ausbuchtung der antriebsseitigen Oberfläche des Abdeckelements eingreift, sodass die Ausbuchtung die Einbuchtung entlang der gesamten gemeinsamen Oberfläche berührt.

Die Ausbuchtung kann beispielsweise eine Rille sein, welche als Teil eines Rings um die Kolbenachse angeordnet ist. Eine Mehrzahl von Rillen kann in unterschiedlichen Radialabständen zu der Kolbenachse angeordnet sein.

Die Ausbuchtungen können zumindest teilweise zueinander versetzt angeordnet sein, sodass eine Luftströmung um die Ausbuchtungen herum erfolgt. Die Ausbuchtungen bilden eine Labyrinthstruktur aus, durch welche Luft aus den Vorratskammern der Kartusche durch den Kolben hindurchtreten kann. Diese Variante kommt insbesondere für eine Rille in betracht, die ringförmig ausgestaltet ist, welche eine Funktion als Dichtelement erfüllt.

An die medienseitige Oberfläche kann an deren äusseren Umfang ein mantelförmiges Stützelement angebracht sein. Dieses mantelförmige Stützelement kann in die Nut hineinragen, die zwischen Kolbenkörper und Kolbenmantel ausgebildet ist.

Die Nut weist einen Nutgrund auf, wobei in dem Nutgrund ein Aufnahmeelement angebracht ist, in welchem der Rand des mantelförmigen Stützelements hineinragt.

Das Stützelement kann nach einem bevorzugten Ausführungsbeispiel mindestens einen Entlüftungsspalt enthalten, welcher mit dem Entlüftungsspalt, insbesondere mit einem ringförmigen Entlüftungsspalt sowie dem Verbindungsweg verbindbar ist.

Der Entlüftungsspalt ist beispielsweise als Schlitz im mantelförmigen Stützelement ausgebildet. Eine Mehrzahl von Entlüftungsspalten kann vorgesehen sein. Diese Entlüftungsspalte können am Umfang des mantelförmigen Stützelements verteilt sein, insbesondere können die Entlüftungsspalte in regelmässigen Abständen zueinander angeordnet sein.

Ein Verfahren zur Herstellung eines Kolbens nach einem der vorhergehenden Ausführungsbeispiele umfasst die Schritte des Herstellens des Kernkörpers im Spritzgussverfahren und anschliessendes Anbringen des Abdeckelements im Mehrkomponentenspritzgussverfahren auf derselben Spritzgussvorrichtung.

Eine Kartusche zum Austrag von mehreren Komponenten enthält mindestens einen Kolben, vorzugsweise mehrere Kolben, wobei die Komponenten in nebeneinander oder koaxial angeordneten Hohlräumen der Kartusche angeordnet sind. Des weiteren kann an die Kartusche ein Austraggerät angeschlossen werden oder die Kartusche in ein Austraggerät eingelegt werden. Mittels des Austraggeräts ist der Kolben bewegbar. Das Austraggerät ist auf der Antriebsseite mit dem Kolben verbindbar.

Besonders vorteilhaft findet der Kolben nach einem der vorhergehenden Ausführungsbeispiele Verwendung für den Austrag von feststoffhaltigen Füllmassen, sowie für pastöse oder zähflüssige Massen.

Nachfolgend wird die Erfindung anhand der Zeichnungen erläutert. Es zeigen:
- Fig. 1: einen Kolben gemäss eines ersten Ausführungsbeispiels der Erfindung,
- Fig. 2: eine Ansicht der Medienseite des Kolbenkörpers,
- Fig. 3: eine Ansicht der Medienseite des Kolbens,
- Fig. 4: einen Kolben gemäss eines zweiten Ausführungsbeispiels der Erfindung,
- Fig. 5: einen Ringkolben gemäss eines weiteren Ausführungsbeispiels der Erfindung.

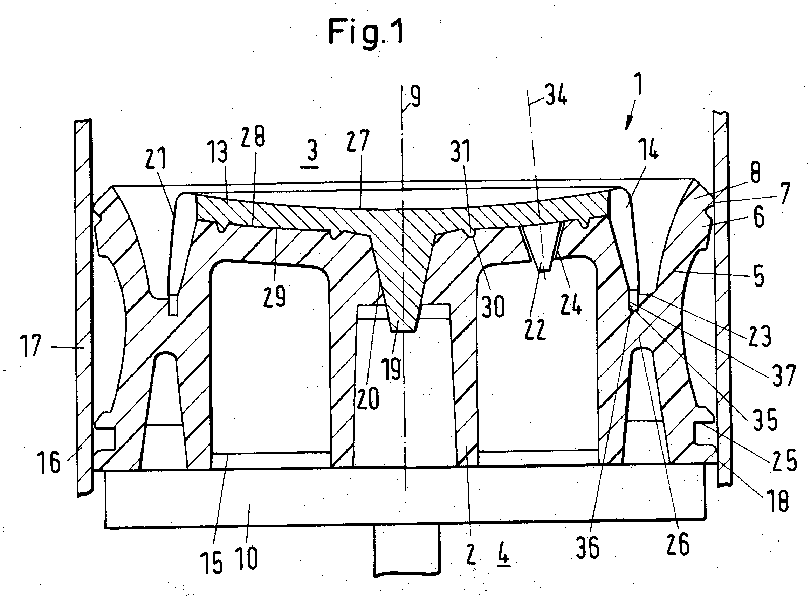

Fig. 1 zeigt einen Kolben gemäss eines ersten Ausführungsbeispiels der Erfindung. Der Kolben 1 umfasst einen Kolbenkörper 2, der meist mittels eines Spritzgussverfahrens aus Kunststoff hergestellt ist. Der Kolben 1 wird bevorzugt verwendet, um eine Füllmasse insbesondere von fluiden oder pastösen Medien aus einer Kartusche auszutragen. Die Füllmasse kann auch Feststoffe enthalten. Die Füllmasse befindet sich in einer Vorratskammer der Kartusche 17, in welcher der Kolben 1 verschiebbar ist. Eine Wand 16 der Vorratskammer der Kartusche 17 ist teilweise dargestellt. Der Kolben 1 gleitet entlang der Wand 16 und schiebt bei dieser Bewegung die Füllmasse durch eine nicht dargestellte Austragöffnung aus. Die der Füllmasse zugewandte Seite des Kolbens 1 soll im folgenden als Medienseite 3 bezeichnet werden. Um den Kolben 1 in Bewegung zu versetzen und in Bewegung zu halten, wird eine Druckkraft mittels eines Austraggeräts oder eines Druckfluids aufgebracht. Das Austraggerät 10, von welchem ein Stösselelement dargestellt ist, befindet sich auf der Seite des Kolbens, die der Medienseite 3 gegenüber liegt. Diese Seite wird nachfolgend als Antriebsseite 4 bezeichnet.

Der Kolben 1 umfasst einen Kolbenkörper 2 und einen Kolbenmantel 5. Der Kolbenkörper 2 wird von der Antriebsseite 4, der Medienseite 3 sowie dem Kolbenmantel 5 begrenzt. Der Kolbenmantel bildet 5 eine Verbindung zwischen der Medienseite 3 und der Antriebsseite 4 aus, wobei der Kolbenmantel 5 um eine Kolbenachse 9 angeordnet ist. Der Kolbenmantel 5 ist über ein ringförmiges Stegelement 26 mit dem Kolbenkörper 2 verbunden, sodass zwischen Kolbenkörper 2 und Kolbenmantel 5 auf der Medienseite eine umlaufende Nut 23 ausgebildet ist. Zusätzlich sind zwischen dem Kolbenkörper 2 und dem Kolbenmantel 5 in den meisten Fällen Versteifungsrippen 15 vorgesehen. Insbesondere ist der Kolbenmantel 5 rotationssymmetrisch ausgebildet, wenn der Kolben 1 zur Aufnahme in einer Kartusche 17 mit einer zylindrischen Vorratskammer bestimmt ist.Der Kolben 1 ist zumeist ein Kunststoffbauteil, welches vorteilhafterweise im Spritzgussverfahren hergestellt worden ist.

In den meisten Fällen weist der Kolbenkörper 2 eine Mehrzahl von Ausnehmungen aus oder ist als Hohlkörper aufgebaut. Schon aus Gründen der Materialeinsparung sowie aufgrund der Schwierigkeiten, welche das Spritzgiessen von dickwandigen Bauteilen nach sich zieht, werden der Kolbenkörper 2 sowie der Kolbenmantel 5 schon ab Durchmessern von einigen Zentimetern als dünnwandige Bauteile hergestellt. Die erforderliche Formstabilität erhält der Kolbenkörper 2 durch Versteifungsrippen 15. Die Versteifungsrippen 15 sind auf der Antriebsseite 4 des Kolbens 1 angeordnet. Das Vorsehen von Versteifungsrippen 15 gewährleistet, dass der Kolben 1 formstabil bleibt, auch wenn beim Austrag der Füllmasse der Kolben 1 mittels eines Austraggeräts unter Druckbelastung gesetzt wird.

Zudem weist der Kolben 1 ein Abdeckelement 13 auf, welches am Kolbenkörper 2 auf der Medienseite 3 angebracht ist. Ein derartiges Abdeckelement 13 kann vorteilhafterweise aus einem Material gefertigt sein, welches eine höhere Beständigkeit in Bezug auf die Füllmasse hat als das Material, aus welchem der Kolbenkörper gefertigt ist. Somit kann das Abdeckelement 13 eine Schutzfunktion für den Kolbenkörper 2 entfalten. Ein Abdeckelement 13 wird somit bevorzugt dann verwendet, wenn das Füllmaterial dazu neigt, das Kolbenmaterial anzugreifen. Dies gilt insbesondere für Kolben 1 aus weichem Kunststoff, wie beispielsweise LDPE. LDPE wird beispielsweise durch Polyesterharze angegriffen und quillt auf.

An die medienseitige Oberfläche 27 des Abdeckelements 13 ist an dessen äusserem Umfang nach dem Ausführungsbeispiel gemäss Fig. 1 ein mantelförmiges Stützelement 21 angebracht. Das mantelförmige Stützelement 21 steht in flächigem Kontakt mit dem Kolbenkörper 2. Das Abdeckelement 13 weist somit eine antriebsseitige Oberfläche 29 auf, die auf der medienseitigen Oberfläche 28 des Kolbenkörpers 2 unmittelbar vollständig aufliegt. Das heisst die antriebsseitige Oberfläche 29 des Abdeckelements 13 steht mit der medienseitigen Oberfläche 28 des Kolbenkörpers 2 in berührendem Kontakt und zwar derart, dass im wesentlichen die gesamte gemeinsame antriebsseitige Oberfläche 29 auf der medienseitige Oberfläche 28 entlang der gesamten gemeinsamen Kontaktfläche aufliegt. Bevorzugt sind mindestens 60% der antriebsseitigen Oberfläche 29 des Abdeckelements 13 mit der medienseitigen Oberfläche 28 des Kolbenkörpers 2 in flächigem Kontakt, besonders bevorzugt mindestens 75%, insbesondere mindestens 90%.

Das mantelförmige Stützelement 21 ragt in eine umlaufende Nut 23 des Kolbenkörpers 2 auf der Medienseite 3. Die Nut 23 weist einen Nutgrund 36 auf, wobei in dem Nutgrund 36 ein Aufnahmeelement 37 angebracht ist, in welches der Rand 35 des mantelförmigen Stützelements 21 eingreift. Das Abdeckelement 13 wird dort gehalten, damit sich das Abdeckelement 13 nicht vom Kolbenkörper 2 lösen kann. Die Befestigung erfolgt durch die Schwindungsdifferenz der beiden Materialien. Des weiteren wirkt das Aufnahmeelement 37 für das mantelförmige Stützelement 21 als Auflager, sodass das Abdeckelement 13 nach Wegnahme des Austraggeräts 10 in die ursprüngliche Position zurückfedern kann. Der Rand 35 des mantelförmigen Stützelements 21 ist im wesentlichen zylinderförmig ausgestaltet.

Das Abdeckelement 13 weist eine medienseitige Oberfläche 27 auf, die gegenüberliegend zu der antriebsseitigen Oberfläche 29 angeordnet ist. Die medienseitige Oberfläche 27 des Abdeckelements 13 hat eine konkave Krümmung.

Für einen Kolben nach dem Stand der Technik gibt es einen oberen Grenzwert für die Setzgeschwindigkeit. Unter Setzgeschwindigkeit versteht man die Geschwindigkeit, mit welcher der Kolben bewegt wird, um die in der Kartusche befindliche Füllmasse auszutragen. Würde man die Setzgeschwindigkeit über diesen Grenzwert weiter erhöhen, würde durch die Luft ein derart hoher Druck auf die Wand 16 der Kartusche 17 ausgeübt werden, dass die Wand 16 der Kartusche 17 sich nach aussen beult. Eine derartige Vergrösserung der Querschnittsfläche der Kartusche 17 ist schon deshalb unerwünscht, weil das Führungselement 7 den Kontakt mit der Wand 16 der Kartusche 17 verlieren kann. Hierdurch kann Füllmasse zwischen dem Führungselement 7 und der Wand 16 auf die Antriebsseite des Kolbens gelangen. Zudem fehlt dem Kolben 1 die Führung, sodass der Kolben 1 selbst kippen oder verkanten kann. Aus diesen Gründen konnte bislang die Setzgeschwindigkeit bei Kolben nach dem Stand der Technik nicht weiter erhöht werden.

Um die Setzgeschwindigkeit zu erhöhen, kann das Abdeckelement 13 aus einem formstabileren Material als der Kolbenkörper 2 hergestellt sein. Allerdings konnte bislang die Verbindung eines Abdeckelements 13 mit einem Kolbenkörper 2 nur unter zwei wesentlichen Einschränkungen realisiert werden. Zum einen muss ein zusätzlicher Montageschritt vorgesehen werden, um die in zwei verschiedenen Arbeitsschritten hergestellten Kolbenkörper 2 und Abdeckelement 13 miteinander zu verbinden. Bedingt durch diesen zusätzlichen Montageschritt kann ein Zusammenfügen eines Ventilelements 22 mit einer Achse 34 nur dann erfolgen, wenn die Achse 34 des Ventilelements 22 parallel zur Kolbenachse 9 ausgerichtet ist. Nur unter dieser Randbedingung lassen sich das Abdeckelement 13, welches das Ventilelement 22 enthält, zerstörungsfrei in die entsprechende Ausnehmung des Kolbenkörpers 2 derart einfügen, dass die Dichtigkeit gegenüber dem Austritt von Füllmasse auf die Antriebsseite 4 des Kolbens gewährleistet bleiben kann.

Hat die Achse 34 des Ventilelements 22 hingegen einen Schnittpunkt mit der Kolbenachse 9, oder schliesst sie mit der Kolbenachse 9 einen Winkel ein, der grösser als 0° und kleiner als 90° ist, können der Kolbenkörper 2 und das Abdeckelement 13 nicht zerstörungsfrei miteinander in Eingriff gebracht werden. Daher müssen bei Anwendung des konventionellen Spritzgussverfahrens die Achse 9 des Kolbenkörpers 2 und die Achsen jedes Stiftelements 19 oder Ventilelements 22 parallel zueinander ausgerichtet sein.

Im Mehrkomponentenspritzgussverfahren ist es möglich, zwei Materialien unterschiedlicher Steifigkeit zu kombinieren. Diese Kombination ist auch dann möglich, wenn der Kolbenkörper 2 zum Ventilelement 22 derart ausgerichtet sind, dass ihre Achsen einen Winkel zueinander einschliessen, der grösser als 0° ist. Wird insbesondere ein Abdeckelement 13 mit konkaver medienseitiger Oberfläche 27 verwendet, kann dieses im Mehrkomponentenspritzgussverfahren spannungsfrei montiert werden. Wenn das Material des Abdeckelements 13 eine sich von dem Material des Kolbenkörpers 2 unterscheidende Wärmeausdehnung aufweist, kann das Abdeckelement 13 ähnlich einer Schrumpfverbindung eine festere, das heisst dichtere Verbindung mit dem Kolbenkörper 2 eingehen. Das heisst, die Kanäle zwischen Kolbenkörper und Abdeckelement sind dicht verschlossen, solange das Stiftelement 19 oder das Ventilelements 22 nicht geöffnet wird. Somit kann die Querschnittsfläche der Durchtrittsöffnung für die Luft grösser gewählt werden, weil die Dichtfunktion von dem Abdeckelement 13 und dem Kolbenkörper 2 übernommen ist.

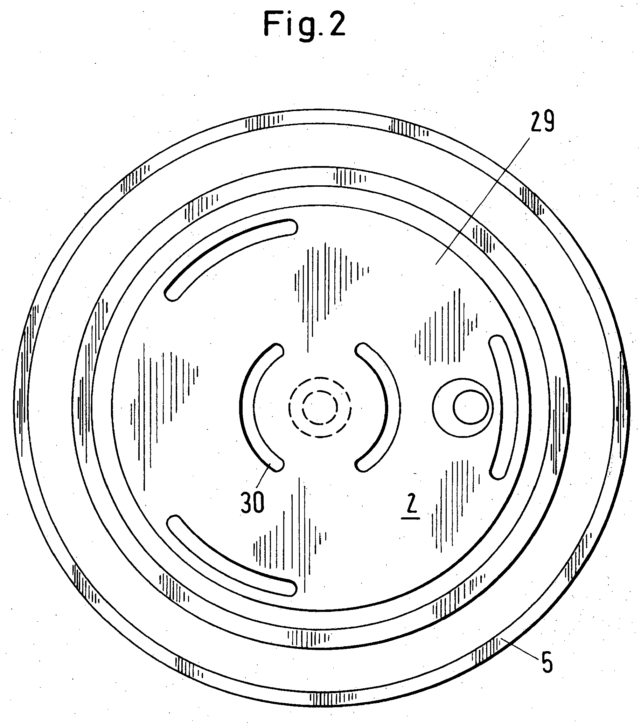

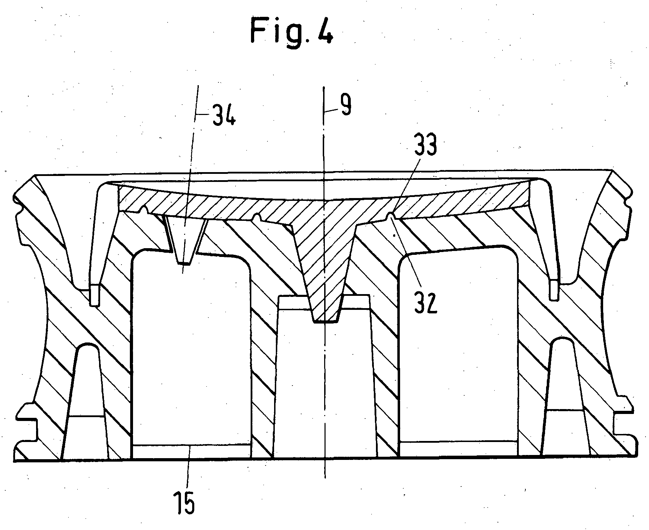

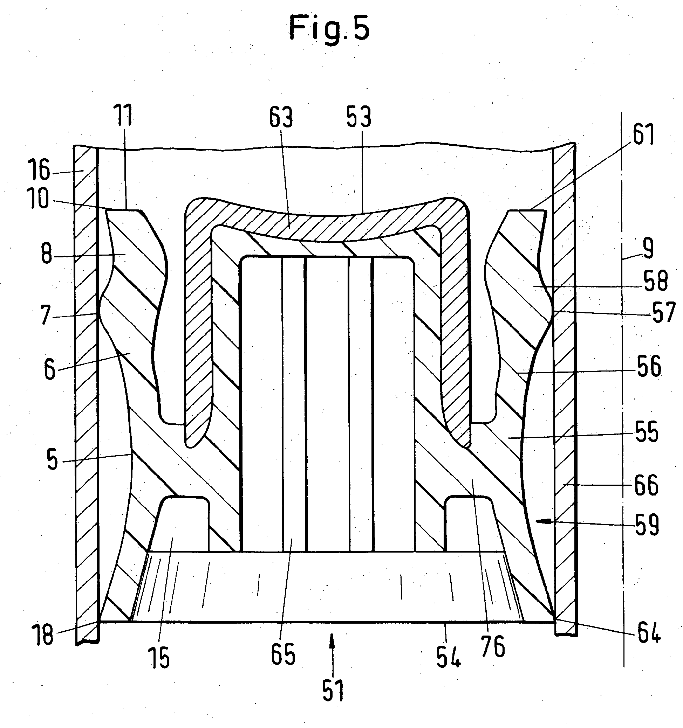

Wird das Ventilelement 22 geöffnet, kann der Durchsatz der Luft erhöht werden, weil die grössere Durchtrittsöffnung freigegeben wird, sodass die durch die Durchtrittsöffnung durchtretende Luft schneller abgeführt werden kann, ohne dass hierdurch zusätzlicher Aufwand bei der Montage des Kolbenkörpers 2 und des Abdeckelements 13 erforderlich wäre. Selbstverständlich kann auch eine Mehrzahl von Ventilelementen vorgesehen sein, insbesondere auch für einen Ringkolben gemäss Fig. 5. Auf der medienseitigen Oberfläche 28 des Kolbenkörpers 2 ist eine Einbuchtung 30 vorgesehen, die in eine korrespondierende Ausbuchtung 31 der antriebsseitigen Oberfläche 29 des Abdeckelements 13 eingreift. Die Ausbuchtung 31 gem. Fig. 1 oder die Ausbuchtung 32 gemäss Fig. 4 ist eine Rille, welche als Teil eines Rings um die Kolbenachse 9 angeordnet ist. Durch die spezielle Kontur hat die Rille eine Funktion als Dichtelement. Daher berührt die Ausbuchtung 32 die Einbuchtung 33 entlang der gesamten gemeinsamen Oberfläche. Wiederum wird die Dichtfunktion durch die Schwindungsdifferenz der unterschiedlichen Materialien erhalten. Beispielsweise beträgt die Schwindung bei einem Polyamid durchschnittlich 0.8 % und bei einem Polyethylen mit geringer Dichte 2.2 %. Die Differenz zwischen Polyamid und dem Polyethylen mit geringer Dichte beträgt dementsprechend 1,4 % Das bedeutet, dass ein mit Polyethylen mit geringer Dichte ummanteltes Polyamidbauelement im ausgekühlten Zustand bedingt durch die grössere Schwindung in dem Polyethylen-Mantel dichtend aufgenommen ist. Eine Mehrzahl von Ausbuchtungen 31, 32 kann in unterschiedlichen Radialabständen zu der Kolbenachse angeordnet sein, was in Fig. 2 gezeigt ist.

Das Abdeckelement 13 enthält ein Stiftelement 19, welches durch den Kolbenkörper 2 auf die Antriebsseite des Kolbens 1 reicht. Das Stiftelement 19 ist als konisches Steckelement ausgebildet. Des weiteren ist das Stiftelement 19 rotationssymmetrisch bezogen auf die Kolbenachse 9.

Das Abdeckelement 13 oder der Kolbenkörper 2 kann auch ein Entlüftungselement 14 enthalten. Dieses Entlüftungselement dient dazu, Gase aus Gaseinschlüssen, die beispielsweise beim Einsetzen des Kolbens in die Kartuschenwand entstehen, aus dem Kolbeninnenraum zu entfernen. Insbesondere kann es sich bei dem Gas um Luft handeln. Die Ausbuchtungen 31, 32 sind vorteilhafterweise zueinander versetzt angeordnet, sodass das Gas entlang eines kurvenförmigen Verbindungswegs strömen kann. Durch die Anordnung der Ausbuchtungen 31, 32 ist eine labyrinthartige Struktur ausgebildet.

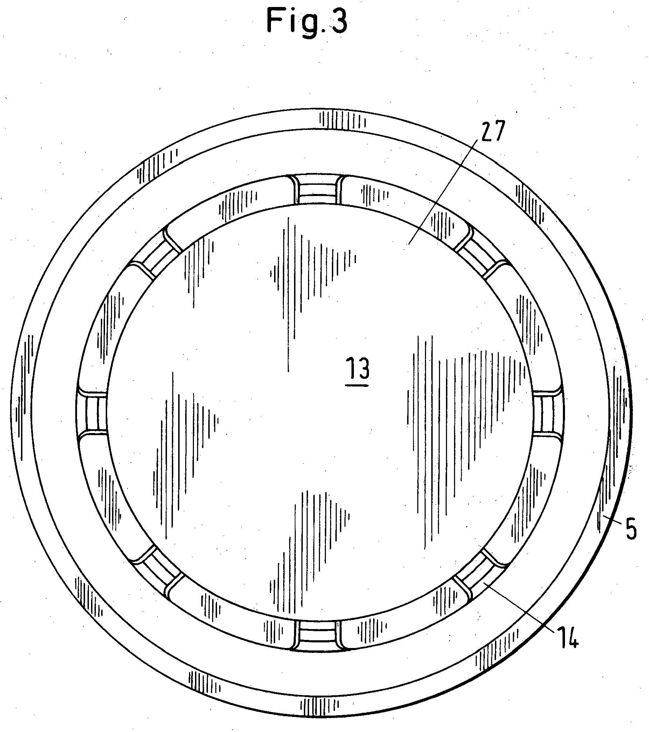

Ein derartiges Entlüftungselement 14 ist in Fig. 1 im Schnitt gezeigt und in Fig. 3 in einer Ansicht auf den Kolben 1 auf dessen Medienseite 3. Durch dieses Entlüftungselement 14 kann Gas, welches sich im Innenraum der Kartusche 17 zwischen Füllmasse und Kolben 1 befindet, nach aussen, das heisst auf die Antriebsseite 4 entweichen, ohne dass die Füllmasse austritt. Das Entlüftungselement 14 ist geschlossen, solange die Kartusche 17 in gefülltem Zustand gelagert wird. Soll die Füllmasse ausgetragen werden, wird das Austraggerät 10 mit dem Kolben 1 auf seiner Antriebsseite 4 in Kontakt gebracht. Hierbei kann das Austraggerät auch mit einem Stiftelement 19 oder einem Ventilelement 22 des Abdeckelements 13 in Kontakt kommen. Das Stiftelement 19 oder das Ventilelement 22 kann mittels eines Öffnungselements, welches auf der Antriebsseite mit dem Austraggerät 10 in Verbindung ist, geöffnet werden, indem das Stiftelement 19 von seinem Sitz 20 abhebt, wenn das Austraggerät 10 mit der Antriebsseite 4 in Kontakt kommt. Hierbei wird ein Strömungsweg für das Gas geöffnet. Das Gas tritt über das mantelförmige Stützelement 21 des Abdeckelements 13 in den Zwischenraum zwischen Abdeckelement 13 und Kolbenkörper 2 ein und verlässt die Vorratskammer durch den Kolben über den geöffneten Strömungsweg durch die Öffnung zwischen Stiftelement 19 und Sitz 20 oder zwischen Ventilelement 22 und Sitz 24. Nach der Betätigung des Ventilelements 22 wird die Abdichtung über das Rückstellverhalten der konkaven Kontur des Abdeckelements 13 gewährleistet. Insbesondere kann die konkave Kontur als Teil einer kugelförmigen Fläche ausgebildet sein. Üblicherweise werden als Entlüftungselement 14 mehrere kleine Entlüftungsspalte in dem mantelförmigen Stützelement 21 vorgesehen.

Im Anschluss an diese Entlüftungsspalte kann ein labyrinthartiger Verbindungsweg zwischen dem Kolbenkörper 2 und dem Abdeckelement 13 vorgesehen sein. Allfälliges, durch die Entlüftungsspalte hindurchtretendes Füllmaterial wird entlang dieses labyrinthartigen Verbindungswegs abgelagert. Dieser Verbindungsweg ist in Fig. 1 geschlossen, da das Abdeckelement unmittelbar vollständig auf der medienseitigen Oberfläche des Kolbenkörpers 2 aufliegt.

Der Kolben 1 weist Mittel gegen den Austritt von Füllmasse auf der Antriebsseite auf. Hierzu wird entlang der Gleitfläche an der Wand 17 der Kartusche 16 üblicherweise mindestens eine Dichtlippe vorgesehen. Im vorliegenden Ausführungsbeispiel ist diese Dichtlippe als Führungselement 7 dargestellt. Das Führungselement 7 befindet sich auf einem Vorsprung 6, der sich zwischen der Nut 23 und der Wand 17 der Kartusche 16 erstreckt. Der Vorsprung 6 ist in dem Ausführungsbeispiel ein dünnwandiger rotationssymmetrischer Körner, der in der Schnittdarstellung als Arm des Kolbenkörpers 2 sichtbar ist.

Im Schnittbild nicht sichtbar ist, dass der Arm zu einem ringförmigen Wulst gehört, der sich entlang des gesamten Umfangs des Kolbenkörpers 2 erstreckt und über das Führungselement 7 eine fluiddichte Verbindung mit der Wand 16 der Kartusche 17 ausbildet.

Der Vorsprung 6 weist ein Führungselement 7 zur Führung des Kolbens in einer Kartusche 17 auf, welches zur Herstellung eines dichtenden Kontakts mit einer Wand 16 der Kartusche 17 geeignet ist. Das Führungselement 7 kann insbesondere als Dichtlippe ausgebildet sein. Bei Bedarf können auch eine Mehrzahl von Dichtlippen vorgesehen sein. Alternativ oder in Ergänzung hierzu kann der Kolbenmantel 5 auch eine Ausnehmung 25 für ein Dichtelement, wie beispielsweise einen O-Ring enthalten. Der Vorsprung 6 umfasst ein Abstreifelement 8, welches im nicht eingebauten Zustand einen geringeren Abstand zur Medienseite 3 aufweist als das Führungselement 7.

Zu Beginn des Austrags der Füllmasse mit einem Kolben gemäss Fig. 1 ist der Vorsprung 6 bereits in den Innenraum der Kartusche 17 eingeführt. Der Kolben liegt mit dem Führungselement 7 im eingebauten Zustand nicht auf der Wand 16 der Kartusche auf. Die Füllmasse befindet sich auf der Medienseite 3 des Kolbens. Wird nun der Kolbenkörper 2 von einem nicht dargestellten Austraggerät in Richtung der Kolbenachse 9 gegen die Füllmasse bewegt, wirkt eine Druckkraft von der Füllmasse auf den Kolben. Diese Druckkraft wirkt auch auf den Vorsprung 6. Der Vorsprung 6 weist vorteilhafterweise eine Auflagefläche 11 auf, die unter der Wirkung der Druckkraft in Richtung der Wand 16 bewegt wird. Durch den Innendruck wird also ein allfälliger Spalt zwischen der Auflagefläche 11 bzw. dem zugehörigen Abstreifelement 8 und der Wand 16 kleiner. Wenn die Füllmasse Feststoffe enthält, können einzelne Partikel nicht in den Spalt zwischen Auflagefläche 11 und Wand 16 gelangen. Die Auflagefläche 11 ist somit derart angeordnet, dass allfällige mittels des Abstreifelements 8 erfasste Feststoffpartikel. gemeinsam mit der Füllmasse ausgetragen werden. Schreitet der Austrag weiter fort, werden die Partikel immer weiter an der Auflagefläche 11 in Richtung der Nut 23 gleiten.

Auf der Antriebsseite 4 des Kolbens ist ein Kippsicherungselement 18 angeordnet, welches zur Verbesserung der Führung des Kolbens in einer Kartusche 17 dient. Zusätzlich kann das Kippsicherungselement 18 als zweite Dichtlippe funktionieren, insbesondere um eine Dichtigkeit auch dann noch zu gewährleisten, wenn die erste Dichtlippe undicht wird. Der Kolben wird durch das Kippsicherungselement 18, welches in Kontakt mit der Wand 16 der Kartusche 17 ist, kippsicher geführt, das heisst, die Achse des Kolbenkörpers 2 fällt mit der Kolbenachse 9 zusammen. Durch das Kippsicherungselement 18 ist gewährleistet, dass die Medienseite 3 in einer Normalebene zur Kolbenachse 9 angeordnet ist, oder wenn die Medienseite 3 keine ebene Fläche ist oder Abschnitte enthält, die nicht in einer Ebene liegen, dass Punkte der medienseitigen Kolbenoberfläche, die durch einen bestimmten Radius und eine bestimmte Höhe gekennzeichnet sind, entlang des Umfangs in im wesentlichen derselben Normalebene liegen. Würde der Kolben 1 kippen, wäre die Bedingung für solche rotationssymmetrische Punkte nicht mehr erfüllt. Durch ein derartiges Kippsicherungselement 18 kann somit ein umfangsseitiger Kontakt mit der Wand 16 der Kartusche 17 während des gesamten Austragsvorgangs aufrecht erhalten werden, sodass gemeinsam mit dem früher beschriebenen Führungselement 7 eine Auslenkung des Kolbens 1 verhindert werden kann.

Fig. 4 zeigt im Unterschied zu Fig. 1 dass auf der medienseitigen Oberfläche 29 des Kolbenkörpers 2 ist eine Ausbuchtung 32 vorgesehen ist, die in eine korrespondierende Einbuchtung 33 der antriebsseitigen Oberfläche 28 des Abdeckelements 13 eingreift. Auch diese Ausbuchtung wirkt als Dichtelement.

Fig. 5 zeigt einen Ringkolben 51, wie er beispielsweise für Koaxialkartuschen zum Einsatz kommt. Die Darstellung enthält nicht die bereits in Zusammenhang mit den vorherigen Ausführungsbeispielen beschriebene Befestigung oder mechanische Verankerung, einen Ventilzapfen sowie die Dichtelemente, insbesondere kreisförmige Dichtelemente, die auch in diesem Ausführungsbeispiel in gleicher Weise vorhanden sein können. In einer Koaxialkartusche sind zwei oder mehrere koaxial zueinander angeordnete zylindrische Hohlräume angeordnet. Jeder dieser Hohlräume ist mit einer Komponente befüllt. Der oder die inneren Hohlräume werden vollständig von dem äusseren Hohlraum umgeben, der als eine zylinderförmige Kartusche ausgebildet ist.

Der Ringkolben 51 umfasst einen Kolbenkörper 52, der meist mittels eines Spritzgussverfahrens aus Kunststoff hergestellt ist. Der Ringkolben 51 wird bevorzugt verwendet, um eine Füllmasse insbesondere von fluiden oder pastösen Medien aus einer Kartusche auszutragen. Die Füllmasse kann insbesondere auch Feststoffpartikel enthalten. Eine Wand 16 der Kartusche 17 ist dargestellt. Der Ringkolben 51 gleitet entlang der Wand 16 und schiebt bei dieser Bewegung die Füllmasse durch eine nicht dargestellte Austragöffnung aus. Die der Füllmasse zugewendete Seite des Ringkolbens 51 soll im folgenden als Medienseite 53 bezeichnet werden. Um den Ringkolben 51 in Bewegung zu versetzen und in Bewegung zu halten wird eine Druckkraft mittels eines Austraggeräts aufgebracht. Das Austraggerät, welches hier nicht dargestellt ist, befindet sich auf der Seite des Kolbens, die der Medienseite 53 gegenüber liegt. Diese Seite wird nachfolgend als Antriebsseite 54 bezeichnet.

Innerhalb des Innenrohrs 67 ist in der Regel ein weiterer Kolben, in der Folge auch als Innenkolben bezeichnet, angeordnet, der in Fig. 5 nicht dargestellt ist. Dieser Innenkolben ist wie der Kolben in dem Ausführungsbeispiel gemäss Fig. 1 ausgestaltet. Der Innenkolben wird gleichzeitig mit dem Ringkolben 51 bewegt, um die Füllmasse aus den Vorratsbereichen der Kartusche 17 auszutragen. Nachfolgend wird daher nur noch auf die Ausgestaltung des Ringkolbens 51 eingegangen.

Der Kolbenkörper 52 wird somit von der Antriebsseite 54, der Medienseite 53 sowie einem äusseren Kolbenmantel 5 und einem inneren Kolbenmantel 55 begrenzt. Der äussere Kolbenmantel 5 kann den gleichen Aufbau wie in den vorhergehenden Ausführungsbeispielen haben. Der innere Kolbenmantel 55 bildet die innere Verbindung zwischen Antriebsseite 54 und Medienseite 53. Der innere Kolbenmantel 55 begrenzt den Kolbenkörper 52 an einer der Kolbenachse 9 zugewandten Innenseite 59.

Der innere Kolbenmantel 55 geht auf der Medienseite 53 in einen Vorsprung 56 über. Der Vorsprung 56 ist in dem Ausführungsbeispiel ein dünnwandiger rotationssymmetrischer Körper, der in der Schnittdarstellung als Arm des Kolbenkörpers 52 sichtbar ist. Der Vorsprung 56 weist ein inneres Führungselement 57 zur Führung des Ringkolbens 51 entlang, also in Richtung der Kolbenachse 9, beispielsweise längs eines Innenrohrs 67 auf. Das Führungselement 57 ist zur Herstellung eines dichtenden Kontakts mit einer Wand 66 des Innenrohrs 67 geeignet. Das Führungselement 57 kann insbesondere als Dichtlippe ausgebildet sein. Bei Bedarf können auch eine Mehrzahl von Dichtlippen vorgesehen sein. Der Vorsprung 56 kann ein Abstreifelement 58 umfassen, welches einen geringeren Abstand zur Medienseite 53 aufweist als das Führungselement 57. Zur Bestimmung des Abstandes wird die Abmessung des Ringkolbens bestimmt, die am nächsten zu der Füllmasse ist oder sogar in die Füllmasse hineinreicht. Diese Abmessung kann bei einfachen Kolben die Kolbenoberfläche sein, oder das die Kolbenoberfläche abdeckende Abdeckelement 63.

Das Führungselement 57 liegt an der Wand 66 des Innenrohrs 67 auf und dichtet den Innenraum der Kartusche, der die Füllmasse enthält, gegen die Umgebung ab, sodass ein Austreten der Füllmasse auf die Antriebsseite verhindert wird.

An das Ende des Kolbenmantels 55, welches das Führungselement 57 enthält, schliesst eine Auflagefläche 61 an, die zwischen 80° und 110° insbesondere im wesentlichen normal zur Kolbenachse 9 angeordnet ist. Die Auflagefläche 61 ist somit derart angeordnet, dass allfällige mittels eines Abstreifelements 58 erfasste Feststoffpartikel gemeinsam mit der Füllmasse ausgetragen werden. Wenn die Auflagefläche 61 im wesentlichen normal zur Kolbenachse angeordnet ist, können die Feststoffpartikel in Richtung der Kolbenachse wandern. Eine Ansammlung von Feststoffpartikeln im wandnahen Bereich kann somit verhindert werden.

Der Ringkolben 51 kann ebenfalls ein Entlüftungselement enthalten, was hier zeichnerisch nicht dargestellt ist. Der Kolbenkörper 52 hat auch Versteifungsrippen 65 sowie ein Kippsicherungselement 18, 64. Des weiteren kann das Abdeckelement 63 gleich ausgestaltet sein, wie in Zusammenhang mit Fig. 1 bis Fig. 4 beschrieben ist.

Das Abdeckelement 63 des Ringkolbens 51 gemäss Fig. 5 weist eine medienseitige Oberfläche 77 sowie eine antriebsseitige Oberfläche 79 auf. Der Kolbenkörpers 52 weist eine medienseitige Oberfläche 78 auf. Auch aus diesem Ausführungsbeispiel ist ersichtlich, dass die antriebsseitige Oberfläche 79 des Abdeckelements vollständig auf der medienseitigen Oberfläche 78 des Kolbenkörpers 52 aufliegt.

## Patentansprüche

1. Kolben (1, 51), der eine Medienseite (3, 53), eine der Medienseite gegenüberliegende Antriebsseite (4, 54) und einen Kolbenkörper (2, 52) aufweist, der umfangsseitig von einem Kolbenmantel (5, 55) begrenzt ist, wobei die Medienseite (3, 53) eine medienseitige Oberfläche (28, 78) umfasst sowie durch den Kolbenmantel (5, 55) eine Verbindung zwischen der Medienseite (3, 53) und der Antriebsseite (4, 54) ausgebildet ist, wobei der Kolbenmantel (5, 55) um eine Kolbenachse (9) angeordnet ist und über ein Stegelement (26, 76) mit dem Kolbenkörper (2, 52) verbunden ist, sodass zwischen Kolbenkörper (2, 52) und Kolbenmantel (5, 55) auf der Medienseite (3, 53) eine umlaufende Nut (23, 73) ausgebildet ist, welche die medienseitige Oberfläche (28, 78) umgibt, wobei auf der Medienseite (3, 53) ein Abdeckelement (13, 63) angeordnet ist, welches eine medienseitige Oberfläche (27, 77) und eine antriebsseitige Oberfläche (29, 79) aufweist, und dessen antriebsseitige Oberfläche (29, 79) auf der medienseitigen Oberfläche (28, 78) des Kolbenkörpers (2, 52) unmittelbar vollständig aufliegt
**dadurch gekennzeichnet, dass**
das Abdeckelement (13, 63) ein Stiftelement (19) oder ein Ventilelement (22) enthält, welches durch den Kolbenkörper (2, 52) auf die Antriebsseite (4, 54) des Kolbens (1, 51) reicht.

2. Kolben nach Anspruch 1, wobei die medienseitige Oberfläche (27, 77) des Abdeckelements(13, 63) eine konkave Krümmung hat.

3. Kolben nach einem der vorhergehenden Ansprüche, wobei auf der medienseitigen Oberfläche (28, 78) des Kolbenkörpers (2, 52) eine Einbuchtung (30) vorgesehen ist, die in eine korrespondierende Ausbuchtung (31) der antriebsseitigen Oberfläche (29, 79) des Abdeckelements (13, 63) eingreift und/oder auf der medienseitigen Oberfläche (28,78) des Kolbenkörpers (2, 52) eine Ausbuchtung (32) vorgesehen ist, die in eine korrespondierende Einbuchtung (33) der antriebsseitigen Oberfläche (29, 79) des Abdeckelements (13, 63) eingreift, sodass die Ausbuchtung (32) die Einbuchtung (33) entlang der gesamten gemeinsamen Oberfläche berührt.

4. Kolben nach Anspruch 3, wobei die Ausbuchtung (31, 32) eine Rille ist, welche als Teil eines Rings um die Kolbenachse (9) angeordnet ist und/oder eine Mehrzahl von Ausbuchtungen (31, 32) in unterschiedlichen Radialabständen zu der Kolbenachse (9) angeordnet sind.

5. Kolben nach Anspruch 4, wobei die Ausbuchtungen (31, 32) zueinander zumindest teilweise versetzt angeordnet sind.

6. Kolben nach Anspruch 1, wobei das Stiftelement (19) und/oder das Ventilelement (22) relativ zum Kolbenkörper (2, 52) bewegbar ist, sodass ein Verbindungsweg zwischen dem Ventilelement (22) und dem Kolbenkörper (2, 52) ausbildbar ist.

7. Kolben nach Anspruch 6, wobei das Stiftelement (19) oder Ventilelement (22) je ein entsprechendes Ende aufweist, welches die antriebsseitige Oberfläche des Kolbenkörpers (2, 52) überragt, sodass das Stiftelement (19) oder das Ventilelement (22) unter Einwirkung einer Druckkraft von dem entsprechenden Sitz abhebbar ist, sodass zur Entlüftung ein Entlüftungsspalt sowie der Verbindungsweg zwischen Abdeckelement (13, 63) und Kolbenkörper (2, 52) ausbildbar ist.

8. Kolben nach Anspruch 7, wobei das Stiftelement (19) und/oder das Ventilelement (22) als konisches Steckelement ausgebildet ist.

9. Kolben nach Anspruch 7 oder 8, wobei das Stiftelement (19) rotationssymmetrisch bezogen auf die Kolbenachse (9) ist.

10. Kolben nach einem der vorhergehenden Ansprüche, wobei an der medienseitigen Oberfläche des Abdeckelements (13, 63) an deren äusserem Umfang ein mantelförmiges Stützelement (21) angebracht ist.

11. Kolben nach Anspruch 10, wobei das mantelförmige Stützelement (21) in die Nut (23) hineinragt.

12. Kolben nach Anspruch 11, wobei die Nut (23) einen Nutgrund (36) aufweist, wobei in dem Nutgrund (36) ein Aufnahmeelement (37) angebracht ist, in welches der Rand (35) des mantelförmige Stützelements (21) eingreift.

13. Kolben nach einem der Ansprüche 10 bis 12, wenn von Anspruch 7 abhängig, wobei das mantelförmige Stützelement (21) mindestens einen Entlüftungsspalt (14) enthält, welcher mit dem Entlüftungsspalt sowie dem Verbindungsweg verbindbar ist.

14. Verfahren zur Herstellung eines Kolbens (1,51) nach einem der vorhergehenden Ansprüche, umfassend die Schritte des Herstellens des Kolbenkörpers (2,52) im Spritzgussverfahren und anschliessendes Anbringen des Abdeckelements (13,63) im
Mehrkomponentenspritzgussverfahren auf derselben Spritzgussvorrichtung.

## Claims

1. A piston (1, 51) which has a media side (3, 53), a drive side (4, 54) disposed opposite the media side (3, 53) and a piston body (2, 52) which is bounded by a piston jacket (5, 55) at the peripheral side, wherein the media side (3, 53) comprises a media-side surface (28, 78) and a connection is formed between the media side (3, 53) and the drive side (4, 54) by the piston jacket (5, 55); wherein the piston jacket (5, 55) is arranged about a piston axis (9) and is connected to the piston body (2, 52) via a web element (26, 76) so that a peripheral groove (23, 73) which surrounds the media-side surface (28, 78) is formed at the media side (3, 53) between the piston body (2, 52) and the piston jacket (5, 55); wherein a cover element (13, 63) which has a media-side surface (27, 77), which has a drive-side surface (29, 79) and whose drive-side surface (29, 79) lies directly completely on the media-side surface (28, 78) of the piston body (2, 52) is arranged at the media side (3, 53),
**characterized in that**
the cover element (13, 63) includes a pin element (19) or a valve element (22) which passes through the piston body (2, 52) to the drive side (4, 54) of the piston (1, 51).

2. A piston in accordance with claim 1, wherein the media-side surface (27, 77) of the cover element (13, 63) has a concave curvature.

3. A piston in accordance with one of the preceding claims, wherein an indentation (30) is provided at the media-side surface (28, 78) of the piston body (2, 52) and engages into a corresponding dimple (31) of the drive-side surface (29, 79) of the cover element (13, 63) and/or a dimple (32) is provided at the media-side surface (28, 78) of the piston body (2, 52) and engages into a corresponding indentation (33) of the drive-side surface (29, 79) of the cover element (13, 63) such that the dimple (32) contacts the indentation (33) along the entire common surface.

4. A piston in accordance with claim 3, wherein the dimple (31, 32) is a channel which is arranged as part of a ring about the piston axis (9); and/or wherein a plurality of dimples (31, 32) are arranged at different radial spacings from the piston axis (9).

5. A piston in accordance with claim 4, wherein the dimples (31, 32) are arranged at least partly offset from one another.

6. A piston in accordance with claim 1, wherein the pin element (19) and/or the valve element (22) are/is movable relative to the piston body (2, 52) such that a connection path can be formed between the valve element (22) and the piston body (2, 52).

7. A piston in accordance with claim 6, wherein the pin element (19) or the valve element (22) each has a corresponding end which projects over the drive-side surface of the piston body (2, 52) such that the pin element (19) or the valve element (22) can be raised from the corresponding seat under the effect of a compressive force such that a venting gap can be formed for venting and the connection path can be formed between the cover element (13, 63) and the piston body (2, 52).

8. A piston in accordance with claim 7, wherein the pin element (19) and/or the valve element (22) are/is configured as a conical plug-in element.

9. A piston in accordance with claim 7 or claim 8, wherein the pin element (19) is rotationally symmetrical with respect to the piston axis (9).

10. A piston in accordance with any one of the preceding claims, wherein a jacket-shaped support element (21) is attached to the media-side surface of the cover element (13, 63) at the outer periphery.

11. A piston in accordance with claim 10, wherein the jacket-shaped support element (21) projects into the groove (23).

12. A piston in accordance with claim 11, wherein the groove (23) has a groove base (36), with a reception element (37) into which a margin (35) of the jacket-shaped support element (21) engages being attached in the groove base (36).

13. A piston in accordance with any one of the claims 10 to 12, when dependent on claim 7, wherein the jacket-shaped support element (21) includes at least one venting gap (14) which is connectable to the venting gap and to the connection path.

14. A method for the manufacture of a piston (1, 51) in accordance with any one of the preceding claims, comprising the steps of the manufacture of the piston body (2, 52) in an injection molding process and of the subsequent attachment of the cover element (13, 63) in a multicomponent injection molding process on the same injection molding apparatus.

## Revendications

1. Piston (1, 51) qui présente un côté milieu (3, 53), un côté entraînement (4, 54) opposé au côté milieu, et un corps de piston (2, 52) qui, côté périphérie, est limité par une enveloppe de piston (5, 55), dans lequel le côté milieu (3, 53) comprend une surface côté milieu (28, 78), et une liaison est réalisée par l'enveloppe de piston (5, 55) entre le côté milieu (3, 53) et le côté entraînement (4, 54), l'enveloppe de piston (5, 55) étant agencée autour d'un axe de piston (9) et reliée au corps de piston (2, 52) par l'intermédiaire d'un élément d'entretoise (26, 76), de telle sorte qu'entre le corps de piston (2, 52) et l'enveloppe de piston (5, 55) une gorge périphérique (23, 73) est réalisée sur le côté milieu (3, 53), laquelle entoure la surface côté milieu (28, 78), dans lequel sur le côté milieu (3, 53) est agencé un élément de recouvrement (13, 63) qui présente une surface côté milieu (27, 77) et une surface côté entraînement (29, 79), et dont la surface côté entraînement (29, 79) repose directement totalement sur la surface côté milieu (28, 78) du corps de piston (2, 52),
**caractérisé en ce que**
l'élément de recouvrement (13, 63) contient un élément formant goupille (19) ou un élément formant soupape (22) qui s'étend à travers le corps de piston (2, 52) jusqu'au côté entraînement (4, 54) du piston (1,51).

2. Piston selon la revendication 1, dans lequel la surface côté milieu (27, 77) de l'élément de recouvrement (13, 63) a une courbure concave.

3. Piston selon l'une des revendications précédentes, dans lequel sur la surface côté milieu (28, 78) du corps de piston (2, 52) est prévue une encoche (30) dans laquelle s'engage une protubérance (31) de la surface côté entraînement (29, 79) de l'élément de recouvrement (13, 63) et/ou sur la surface côté milieu (28, 78) du corps de piston (2, 52) est prévue une protubérance (32) qui s'engage dans une encoche (33) correspondante de la surface côté entraînement (29, 79) de l'élément de recouvrement (13, 63), de telle sorte que la protubérance (32) touche l'encoche (33) le long de toute la surface commune.

4. Piston selon la revendication 3, dans lequel la protubérance (31, 32) est une nervure qui est agencée autour de l'axe de piston (9) en tant que partie d'une bague, et/ou une multitude de protubérances (31, 32) sont agencées à différents espacement radiaux par rapport à l'axe de piston (9).

5. Piston selon la revendication 4, dans lequel les protubérances (31, 32) sont agencées en décalage au moins partiel les unes par rapport aux autres.

6. Piston selon la revendication 1, dans lequel l'élément formant goupille (19) et/ou l'élément formant soupape (22) est mobile par rapport au corps de piston (2, 52), de telle sorte qu'une voie de liaison peut être réalisée entre l'élément formant soupape (22) et le corps de piston (2, 52).

7. Piston selon la revendication 6, dans lequel l'élément formant goupille (19) ou l'élément formant soupape (22) présentent chacun une extrémité correspondante qui dépasse la surface côté entraînement du corps de piston (2, 52), de telle sorte que l'élément formant goupille (19) ou l'élément formant soupape (22) peut être soulevé du siège correspondant sous l'effet d'une force de pression, de telle sorte que pour la désaération, une fente de désaération ainsi que la voie de liaison peuvent être réalisées entre l'élément de recouvrement (13, 63) et le corps de piston (2, 52).

8. Piston selon la revendication 7, dans lequel l'élément en forme de goupille (19) et/ou l'élément en forme de soupape (22) est réalisé sous forme d'élément d'enfichage conique.

9. Piston selon la revendication 7 ou 8, dans lequel l'élément en forme de goupille (19) est à symétrie de révolution par rapport à l'axe de piston (9).

10. Piston selon l'une des revendications précédentes, dans lequel un élément de soutien (21) en forme d'enveloppe est monté sur la périphérie extérieure de la surface côté milieu de l'élément de recouvrement (13, 63).

11. Piston selon la revendication 10, dans lequel l'élément de soutien (21) en forme d'enveloppe fait saillie dans la gorge (23).

12. Piston selon la revendication 11, dans lequel la gorge (23) présente un fond de gorge (36), dans le fond de gorge (36) étant monté un élément de réception (37) dans lequel s'engage le bord (35) de l'élément de soutien (21) en forme d'enveloppe.

13. Piston selon l'une des revendications 10 à 12, lorsqu'elles dépendent de la revendication 7, dans lequel l'élément de soutien (21) en forme d'enveloppe contient au moins une fente de désaération (14) qui peut être reliée avec la fente de désaération ainsi qu'avec la voie de liaison.

14. Procédé de fabrication d'un piston (1, 50) selon l'une des revendications précédentes, comprenant les étapes consistant à fabriquer le corps de piston (2, 52) par procédé de moulage par injection et à rapporter ensuite l'élément de recouvrement (13, 63) par procédé de moulage par injection à plusieurs composants sur le même dispositif de moulage par injection.
